(19) Europäisches Patentamt
European Patent Office
Office européen des brevets

(11) Veröffentlichungsnummer: **0 240 902 B1**

(12) **EUROPÄISCHE PATENTSCHRIFT**

(45) Veröffentlichungstag der Patentschrift: **09.06.93**

(51) Int. Cl.$^5$: **C09B 41/00**, //C09B67/22, C09B67/48

(21) Anmeldenummer: **87104721.3**

(22) Anmeldetag: **31.03.87**

# (54) Verfahren zur Herstellung von Azofarbstoffen.

(30) Priorität: **05.04.86 DE 3611428**

(43) Veröffentlichungstag der Anmeldung:
**14.10.87 Patentblatt 87/42**

(45) Bekanntmachung des Hinweises auf die Patenterteilung:
**09.06.93 Patentblatt 93/23**

(84) Benannte Vertragsstaaten:
**CH DE FR GB IT LI**

(56) Entgegenhaltungen:
**EP-A- 0 028 464**
**EP-A- 0 068 186**
**DE-A- 3 211 607**
**FR-A- 2 207 167**
**FR-A- 2 364 248**
**FR-A- 2 391 253**

(73) Patentinhaber: **CASSELLA Aktiengesellschaft**
**Hanauer Landstrasse 526**
**W-6000 Frankturt am Main 61(DE)**

(72) Erfinder: **Bühler, Ulrich, Dr.**
**Kastanienweg 8**
**W-8755 Alzenau(DE)**
Erfinder: **Schophoff, Friedrich, Dr.**
**Konstanzer Strasse 64**
**W-6000 Frankfurt am Main 61(DE)**
Erfinder: **Weidemüller, Wolf**
**Nordring 101**
**W-6000 Frankfurt am Main 60(DE)**

(74) Vertreter: **Urbach, Hans-Georg, Dr. et al**
**Hanauer Landstrasse 526**
**W-6000 Frankfurt am Main 60 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 240 902 B1

## Beschreibung

Die Erfindung betrifft ein Verfahren zur Herstellung von Azofarbstoffen durch Diazotierung und Kupplung.

Zur Fabrikation von Azofarbstoffen besitzt das Verfahren der Diazotierung und Kupplung eine überragende Bedeutung. Dieses Verfahren wird zumeist zweistufig durchgeführt. Zunächst wird bei der Diazotierung ein diazotierbares aromatisches oder heteroaromatisches Amin in Anwesenheit von wäßriger Mineralsäure z.B. durch Einwirkung von in situ erzeugter salpetriger Säure in eine mineralsaure Lösung oder Suspension eines Diazoniumsalzes überführt. In der zweiten Stufe der Kupplung wird die wäßrige Lösung oder Suspension des Diazoniumsalzes mit der wäßrigen Lösung der Kupplungskomponente vereinigt. Im allgemeinen läßt man dabei die mineralsaure Lösung oder Suspension des Diazoniumsalzes in die wäßrige Lösung der Kupplungskomponente einlaufen. Meist wird dabei durch Zugabe von Basen, wie z.B. Alkalihydroxiden, Alkalicarbonaten, Ammoniak, Calciumcarbonat, Magnesiumoxid und dergleichen oder von Puffersubstanzen der jeweilige optimale pH-Wert eingehalten.

Nach beendeter Kupplung liegt bei Dispersionsfarbstoffen, also in Wasser schwerlöslichen Azofarbstoffen, eine Suspension des Farbstoffs in Wasser vor, aus welcher der Farbstoff abfiltriert wird.

Von einem guten Fabrikationsverfahren wird dabei nicht nur eine hohe Raum-Zeit-Ausbeute und hohe Farbstoffausbeute mit hohem Reingehalt erwartet, sondern der Farbstoff soll nach beendeter Kupplung auch in Form eines gut filtrierbaren Produktes vorliegen. Außerdem soll dieses Produkt nach der Filtration einen Filterkuchen mit möglichst hohem Pastengehalt liefern.

Die Vorteile einer guten Filtrierbarkeit sind dabei z.B. kurze Filtrations- und Waschzeiten, geringe Wasch- und Abwassermengen, geringes Volumen des Filterkuchens sowie gute Auswaschbarkeit des Filterkuchens und damit höherer Farbstoffreingehalt. Bei entsprechend hohem Pastengehalt kann ein aufwendiges Trocknen der Paste für die Weiterverarbeitung entfallen.

Eine Verbesserung der Filtrierbarkeit und eine Erhöhung des Pastengehalts wird gewöhnlich durch Erhitzen des Ansatzes nach der Kupplung erzielt, wobei eine Vergröberung der Farbstoffkristalle oder aber eine Änderung der Kristallform eintritt. Bei den dazu erforderlichen hohen Temperaturen kommt es jedoch im sauren Milieu mehr oder minder zur Zerstörung des Farbstoffs unter Spaltung der Azostruktur bzw. zur Verseifung säurelabiler Gruppen, was eine Verringerung der Ausbeute und/oder des Reingehalts bedingt. Dem versucht man durch Neutralisation des Ansatzes vor dem Erhitzen entgegenzuwirken. Dabei entstehen jedoch große Mengen Salz, die eine Abwasserbelastung darstellen. Darüberhinaus muß bei der Neutralisation die Neutralisationswärme durch Eiszugabe abgefangen werden und/oder das entstandene Salz muß vor der Filtration durch Wasserzusatz in Lösung gehalten werden, was die Volumenausbeute erniedrigt.

Man kann auch der Zerstörung des Farbstoffs entgegenwirken, indem man den Kupplungsansatz vor dem Erhitzen sehr stark mit Wasser verdünnt. Auf diese Weise wird ebenfalls, und zwar in ungleich größerem Ausmaß, die Volumenausbeute verringert.

Bei der Herstellung von bestimmten Azofarbstoffen, die sich nach der normalen Methode der Diazotierung und Kupplung in Wasser nur schwierig herstellen lassen, ist es auch bekannt, die Diazotierung und Kupplung in Mischungen aus Wasser und organischen Lösungsmitteln durchzuführen, die mit Wasser mischbar sind. Als derartige Lösungsmittel werden vor allem niedere Alkanole verwendet, vgl. z.B. US-PS 2 824 096, 3 040 019, 3 218 309, 3 352 845, DE-OS 2 048 839, 2 509 560, DE-AS 2 139 311. Dabei ist es auch bekannt, eine zweiphasige Mischung aus Wasser und einem aliphatischen Alkohol mit einer Kettenlänge von 4 bis 6 C-Atomen zu verwenden, vgl. DE-AS 2 603 836.

Für eine gezielte ortho-Kupplung von Diazokomponenten auf 1-Naphthole bzw. 1-Naphthylamine sind aus den DE-OS 3 229 413 bzw. 3 238 907 Verfahren bekannt, bei denen die Kupplung in einem wäßrigen Zweiphasensystem oder in einem wasserfreien organischen Medium in Gegenwart von aliphatischen Carbonsäuren erfolgt. Als mit Wasser nicht mischbare organische Lösungsmittel werden dabei z.B. Benzol, Toluol, Nitrobenzol, Chlorbenzol, Chloroform, Tetrachlorethylen benutzt. Bei diesen Verfahren wird die Diazoniumverbindung vorzugsweise als festes Diazoniumsalz, z.B. als Tetrafluoroborat oder Zinkdoppelsalz eingesetzt. Nach beendeter Kupplung wird das Lösungsmittel abdestilliert.

Aus der DE-OS 1 927 453 ist ein Verfahren zur Herstellung von metallfreien Azopigmenten bekannt, bei denen die Diazotierung ohne Isolierung der Diazoverbindung und die Kupplung in heterogener Phase durchgeführt wird, wobei die Diazo- und/oder die Kupplungskomponente in Suspension in organischen Lösungsmitteln, die höchstens 10 % Wasser enthalten, vorliegt und die Azopigmente gegebenenfalls durch eine Wärmbehandlung mit hochsiedenden organischen Lösungsmitteln konditioniert werden. Als Lösungsmittel werden z.B. Benzol, Toluol, o-Dichlorbenzol, Tetrachlorethan, Petrol-Kohlenwasserstoffe, Nitrobenzol, Chloroform, Eisessig, Methanol benutzt.

Aus der FR-A-2.391.253 ist ein Verfahren zur Herstellung von Azofarbstoffen bekannt, bei dem eine Diazoniumverbindung eines heterocyclischen Amins aromatischen Charakters der Thiazol-, Benzthiazol-, Benzisothiazol-, Thiadiazol-, Triazol- und Thiophen-Reihe, das im aromatischen Kern gegebenenfalls noch weitere Substituenten enthalten kann, in einem Lösungs- oder Dispergiermittel bestehend aus einer Mischung von 90 bis 15 Gew.% eines aliphatischen Alkohols mit einer Kettenlänge von 4 bis 6 C-Atomen und einer Löslichkeit in Wasser von höchstens 15 Gew.% bei 15 °C und 10 bis 85 Gew.% Wasser bei Temperaturen zwischen -20 °C und +20 °C in Gegenwart einer Säure gekuppelt wird.

Aus der DE-OS 2 312 421 ist ein Verfahren zur Herstellung von Azopigmenten bekannt, bei dem man eine Lösung oder teilweise Dispersion der Diazokomponente in einem hydrophoben organischen Lösungsmittel mit einer Lösung oder teilweisen Dispersion einer Kupplungskomponente in einem hydrophoben organischen Lösungsmittel mischt und umsetzt. Als hydrophobe organische Lösungsmittel werden dabei z.B. Benzol, Naphthalin, Diphenyl, 2-Chlor-naphthalin, Toluol, Nitrobenzol, Nitrotoluol, Anisol, Acetophenon, Ligroin, Tetralin, Butylacetat, Amylacetat angegeben. Nach der Kupplungsreaktion kann eine Reinigung und Kristallisation des Pigmentes durchgeführt werden, indem man die Reaktionsmischung erhitzt. Bevorzugt werden aromatische Lösungsmittel und insbesondere solche mit einem Siedepunkt oberhalb 150 °C eingesetzt, da sie z.B. für das Kristallisationsverfahren nach der Kupplungsreaktion höchst wirksam sind. Es ist insbesondere vorteilhaft, Mono-, Di-, Tri- oder Tetrachlorbenzol, Nitrobenzol, Nitrotoluol oder Nitrochlorbenzol einzusetzen. Sie können z.B. auch Wasser in Mengen von weniger als 30 Gew.% enthalten.

Aus dem Derwent Report der JA-58 160355-A ist es bekannt, Monoazofarbstoffe durch Diazotierung von 4-Nitroanilin, das in 2-Stellung auch durch Halogen oder Methylsulfonyl substituiert sein kann, und Kupplung auf bestimmte N-substituierte Anilinderivate herzustellen. Bei diesem Verfahren wird die Filtrierbarkeit des Farbstoffs dadurch verbessert, daß die Reaktionsmischung nach der Kupplung gegebenenfalls teilweise oder vollständig neutralisiert und in Gegenwart eines organischen hydrophoben Lösungsmittels hitzebehandelt wird. Als organisches hydrophobes Lösungsmittel werden z.B. Benzol, Toluol, Xylol, 4-Methyl-2-pentanon (= MIBK, Methylisobutylketon), Dichlorethan, Dichlorethylen, Tetrachlorethylen, Monochlorbenzol, Dichlorbenzol oder Nitrobenzol verwendet. Das organische Lösungsmittel wird nach der Hitzebehandlung durch Wasserdampfdestillation oder Destillation unter vermindertem Druck entfernt.

Nach den Derwent-Referaten der JA 58 160356-A und 58 160357-A läßt sich dieses Verfahren auch auf Farbstoffe anwenden, deren Diazokomponenten aus bestimmten 2,6-disubstituierten 4-Nitroanilinen bzw. bestimmten 2-Cyano-4-nitro-anilinen besteht.

Grundsätzlich bedeutet das Erhitzen nach der Kupplung eine Verlängerung der Fertigungsdauer sowie eine Erhöhung des Energieaufwands durch Aufheizen und Abkühlen.

Es wurde nun überraschenderweise gefunden, daß sich bei der Herstellung von Azodispersionsfarbstoffen durch Diazotierung und Kupplung in wäßriger Phase die Filtrierbarkeit des nach der Kupplung anfallenden Farbstoffs und der Pastengehalt des nach der Filtration vorliegenden Filterkuchens ohne Hitzebehandlung wesentlich verbessern lassen, wenn die in wäßriger Phase durchgeführte Kupplung in Gegenwart eines Esters einer gegebenenfalls substituierten nieder-aliphatischen Carbonsäure und eines gegebenenfalls substituierten aliphatischen Alkohols durchgeführt wird.

Im Rahmen der vorliegenden Erfindung werden unter niederaliphatischen Carbonsäuren solche mit bis zu 6 C-Atomen verstanden. Geeignete Ester nieder-aliphatischer Carbonsäuren leiten sich z.B. von gegebenenfalls substituierten aliphatischen Mono-carbonsäuren mit 1 bis 6 C-Atomen oder gegebenenfalls substituierten Dicarbonsäuren mit 2 bis 6 C-Atomen und von gegebenenfalls substituierten aliphatischen Alkoholen mit 1 bis 10, vorzugsweise 1 bis 8, C-Atomen ab.

Sowohl der Carbonsäureteil als auch der Alkoholteil des Carbonsäureesters kann ein- oder mehrfach substituiert sein, insbesondere durch Phenyl, Phenoxy, Alkoxy, Alkoxycarbonyl, Alkylcarbonyloxy, Alkoxyalkoxy, Methylen. Die Alkyl- bzw. Alkoxyreste können dabei beispielsweise 1 bis 8 C-Atome besitzen.

Bevorzugte Ester einer gegebenenfalls substituierten nieder-aliphatischen Carbonsäure und eines gegebenenfalls substituierten aliphatischen Alkohols besitzen die allgemeine Formel I

$R - CO - OR^1$ (I)

worin

$R$ = H; Alkyl mit 1 bis 5 C-Atomen, das gegebenenfalls mit $-OR^3$, $-COOR^2$, $-O-CO-R^3$, $-C_6H_5$, $-OC_6H_5$ oder -OH substituiert ist,

$R^1$ = Alkyl mit 1 bis 8 C-Atomen, das gegebenenfalls mit $-OR^4$, $-COOR^4$, $-O-CO-R^4$, $-C_6H_5$, $-OC_6H_5$, $-O-(CH_2)_m-OR^4$ oder OH substituiert ist;

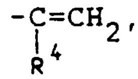

$R^2$, $R^3$, $R^4$ = Alkyl mit 1 bis 8 C-Atomen,
m = 1 bis 4

bedeuten. Die für R und $R^1$ stehenden Alkylreste können dabei mehrfach oder vorzugsweise einfach substituiert sein. Unsubstituierte Alkylreste sind besonders bevorzugt.

Die Reste $R^1$, $R^2$, $R^3$ und $R^4$, bzw. $R^1$ und $R^2$ einerseits und $R^3$ und $R^4$ andererseits, können gleich oder verschieden sein. Normalerweise sind die Reste $R^1$ und $R^2$ gleich. Die für R, $R^1$, $R^2$, $R^3$ und $R^4$ stehenden Alkylreste können geradkettig oder verzweigt sein. In vielen Fällen werden Carbonsäureester der Formel I verwendet, bei denen

R = H, Alkyl mit 1 bis 5 C-Atomen, $-(CH_2)_nCO-OR^2$,
$R^1$, $R^2$ = Alkyl mit 1 bis 8 C-Atomen,
n = 0 bis 4 bedeuten.

Die Carbonsäureester der Formel I sind bekannt oder können nach an sich bekannten Methoden hergestellt werden.

Geeignete Carbonsäureester sind beispielsweise Ameisensäure-, Essigsäure-, Propionsäure-, Buttersäure-, i-Buttersäure-, Valeriansäure-, i-Valeriansäure-, Capronsäure-, Phenylessigsäure-, Glykolsäure-, Oxalsäuredi-, Malonsäuredi-, Bernsteinsäuredi-, Glutarsäuredi-, Adipinsäuredi-, -methyl-, -ethyl-, -propyl-, -i-propyl-, -butyl-, -i-butyl-, -sek.butyl-, -pentyl-, i-amyl-, -hexyl-, -heptyl-, -benzyl-, -3-methoxy-n-butyl-, -isopropenyl-, -i-octylester.

Bevorzugt sind die Ester der Ameisen-, Essig- und Propionsäure und Ester mit 3 bis 8 C-Atomen. Besonders bevorzugt sind Essigsäure- bzw. Propionsäure-methyl-, -ethyl-, -propyl-, -i-propyl-, -butyl-, -i-butyl-, -benzyl- und -isopropenyl-ester.

Bevorzugt sind auch solche Carbonsäureester, die in Wasser bei 20 °C eine Löslichkeit von weniger als 30 Gew.%, insbesondere von weniger als 20 Gew.%, ganz besonders bevorzugt von weniger als 10 Gew.%, besitzen.

Selbstverständlich kann auch ein Gemisch aus 2 oder mehr Carbonsäureestern verwendet werden.

Bei der Durchführung des erfindungsgemäßen Verfahren wird zunächst eine Diazokomponente in üblicher Weise in Wasser diazotiert, und die dadurch erhaltene Lösung oder Dispersion der Diazoniumverbindung wird dann mit einer wäßrigen Lösung oder Dispersion einer Kupplungskomponente vereinigt, wobei die Kupplung in Gegenwart eines Esters der genannten Art durchgeführt wird . Vorzugsweise läßt man dabei die Lösung oder Dispersion des Diazoniumsalzes in die Lösung oder Dispersion der Kupplungskomponente einlaufen. Aber auch die umgekehrte Arbeitsweise ist möglich, bei der man die Lösung oder Dispersion der Kupplungskomponente in die Lösung oder Dispersion des Diazoniumsalzes einlaufen läßt. Bei beiden Arbeitsweisen wird der Carbonsäureester normalerweise vor Beginn der Kupplung der Lösung oder Dispersion der Kupplungskomponente zugefügt. Der Carbonsäureester kann jedoch auch vor Beginn der Kupplung der Lösung oder Dispersion des Diazoniumsalzes, oder sowohl der Diazo- als auch Kupplungslösung oder -dispersion zugefügt werden.

Die zur Anwendung kommende Menge des Carbonsäureesters ist, bezogen auf die nach beendeter Kupplung vorliegende Größe des Ansatzes, nur gering. Bezogen auf die bei der Kupplung erhaltene Farbstoffmenge, trocken gerechnet, kommen bei dem erfindungsgemäßen Verfahren 0,3 bis 150 Gew.%, vorzugsweise 0,5 bis 50 Gew.%, ganz besonders bevorzugt 1 bis 15 Gew.%, Carbonsäureester zum Einsatz. Vorzugsweise wird die gesamte Menge des Carbonsäureesters der Lösung oder Dispersion der Kupplungskomponente vor der Kupplung zugegeben. Sie kann jedoch auch während der Kupplung portionsweise oder kontinuierlich zugesetzt werden. Falls ein Teil oder die Gesamtmenge des Carbonsäureesters vor der Kupplung der Diazolösung oder -dispersion zugegeben werden soll, ist es zweckmäßig, die Diazolösung oder -dispersion zunächst mit Wasser zu verdünnen, um eine schnelle Hydrolyse des Carbonsäureesters zu verhindern. Bei dem erfindungsgemäßen Verfahren können auch mehr als 150 Gew.% Carbonsäureester, bezogen auf die Farbstoffmenge, zum Einsatz kommen, doch bringt dies keine Vorteile. Schon aus wirtschaftlichen Gründen wird man den Carbonesterzusatzt so gering wie möglich wählen. In vielen Fällen kommt man mit maximal 15 Gew.%, bezogen auf die Farbstoffmenge, aus. Bezieht man die zum Einsatz kommende Carbonestermenge z.B. auf die Wassermenge der Kupplungslösung oder -dispersion, dann kommen bei dem erfindungsgemäßen Verfahren etwa 0,5 bis 150 Gew.%, vorzugsweise etwa 1 bis 20 Gew.%, Carbonsäureester zum Einsatz.

Vorzugsweise wird von den etwas stärker wasserlöslichen Carbonsäureestern mit 2 bis 4 C-Atomen prozentual mehr eingesetzt als von den weniger wasserlöslichen Carbonsäureestern mit insgesamt mehr als 5 C-Atomen.

Die Herstellung der mineralsauren Lösung oder Suspension des Diazoniumsalzes, das bei dem erfindungsgemäßen Verfahren eingesetzt wird, erfolgt, wie üblich, dergestalt, daß ein diazotierbares aromatisches oder heterocyclisches Amin in einer wäßrigen oder konzentrierten Mineralsäure mit einem Diazotierungsmittel umgesetzt wird. Beispiele für geeignete Säuren sind Phosphorsäure und insbesondere Salzsäure oder Schwefelsäure. Diazotierungsmittel sind z.B. die Salze der salpetrigen Säure, insbesondere die Alkalisalze wie z.B. Natriumnitrit oder salpetrige Säure entwickelnde Substanzen, wie z.B. Nitrosylschwefelsäure.

Bei der Diazotierung wird üblicherweise das zu diazotierende Amin in der Mineralsäure vorgelegt und das Diazotierungsmittel zudosiert. In besonderen Fällen kann jedoch auch das Diazotierungsmittel, z.B. Nitrosylschwefelsäure, vorgelegt und das zu diazotierende Amin eingetragen werden. Die Diazotierung erfolgt in Abhängigkeit von der Löslichkeit und der Basizität des zu diazotierenden Amins bzw. in Abhängigkeit von der Stabilität der Diazoniumverbindung bei Temperaturen von -25 bis 60 ° C.

Die Herstellung der wäßrigen Lösung oder Dispersion der Kupplungskomponente erfolgt durch Eintragen der Kupplungskomponente in Wasser und In-Lösung-Rühren oder feines Verteilen. Wie bereits erwähnt, wird der zur Anwendung kommende Carbonsäureester normalerweise der wäßrigen Lösung oder Dispersion der Kupplungskomponente zugesetzt. Es ist jedoch auch möglich, die Kupplungskomponente in ein Gemisch aus Wasser und Carbonester einzutragen. Falls sich die Kupplungskomponente bei der Herstellung der Kupplungslösung nicht vollständig in der Wassermenge bzw. in dem Wasser-Carbonester-Gemisch auflöst, kann sie durch Ansäuern mit einer Säure, wie z.B. einer Mineralsäure, wie Salzsäure, Schwefelsäure oder Phosphorsäure oder einer Carbonsäure, wie z.B. Essigsäure oder Propionsäure oder durch Alkalischstellen, z.B. mit einem Alkalihydroxid, wie Natron- oder Kalilauge, oder mit einem Erdalkalihydroxid, wie Calciumhydroxid, oder mit einem Alkali-oder Erdalkalicarbonat, wie Soda oder Calciumcarbonat ganz oder teilweise in Lösung gebracht werden. Vorzugsweise wird die dabei benötigte Säure oder Base vor dem Eintragen der Kupplungskomponente zugesetzt. Löst sich die Kupplungskomponente erst bei pH-Werten unter 3 oder über 10, ist es zweckmäßig, den Carbonsäureester erst unmittelbar vor der Kupplung zuzusetzen. Selbstverständlich kann jedoch auch eine Suspension der Kupplungskomponente, in der die Kupplungskomponente also nur angelöst ist, zur Kupplung verwendet werden. Es ist dabei vorteilhaft, die Kupplungskomponente in der wäßrigen Phase fein zu verteilen, z.B. mit Hilfe eines Zackenrührers oder einer Stiftmühle.

Die Kupplungstemperatur liegt insbesondere im Bereich von -10 bis 80 ° C, vorzugsweise bei 0 bis 60 ° C, bzw. unter dem Siedepunkt des erfindungsgemäß eingesetzten Carbonsäureesters, und in Abhängigkeit von der Reaktivität bzw. Löslichkeit der Kupplungskomponente und der Reaktivität der Diazonium-Verbindung in vielen Fällen bei -10 bis 40 ° C, ganz besonders bevorzugt bei 0 bis 30 ° C.

Bei der Durchführung der Kupplung muß meist indirekt oder direkt, z.B. durch Zugabe von Eis, gekühlt werden.

Zur Beschleunigung der Kupplung und zum Abfangen der bei der Kupplung durch die mineralsaure Lösung der Diazonium-Verbindung in den Kuplungsansatz gelangenden Säure bzw. der bei der Kupplung frei werdenden Säure kann es zweckmäßig sein, in an sich bekannter Weise eine Base, insbesondere ein Alkali- oder Erdalkalihydroxid, zuzusetzen oder die Reaktionsmischung zu puffern, um den optimalen pH-Wert bei der Kupplung einzuhalten. Geeignete Alkalihydroxide sind z.B. Kalilauge, insbesondere Natronlauge. Zur Pufferung werden dem Reaktionsgemisch Puffersubstanzen zugesetzt. Puffersubstanzen sind z.B. die Alkali- oder Erdalkalisalze schwächerer Säuren, wie z.B. die Natriumsalze der Phosphorsäuren.

Zweckmäßigerweise wird die Kupplung in an sich bekannter Weise in Gegenwart von oberflächenaktiven Substanzen durchgeführt, die üblicherweise zusammen mit der Kupplungs-Komponente vorgelegt werden. Oberflächenaktive Substanzen können kationischen und vorzugsweise nichtionischen oder anionischen Charakter haben, bzw. sie können Mischungen von oberflächenaktiven Substanzen der genannten Gruppen sein. Es können auch Mischungen von nichtionischen und anionischen oberflächenaktiven Substanzen verwendet werden.

Anionische oberflächenaktive Substanzen sind z.B. die Kondensationsprodukte von aromatischen Sulfonsäuren mit Formaldehyd, Ligninsulfonate mit einem durchschnittlichen Molekulargewicht zwischen 1000 und 80 000, Dialkylsulfosuccinate mit je 3 bis 10 C-Atomen in den Alkylgruppen, sulfatierte oder sulfonierte Fettsäuren oder Fettsäureester mit 10 bis 22 C-Atomen im Fettsäurerest. Normalerweise liegen diese anionischen oberflächenaktiven Substanzen in Form ihrer Alkali-, Ammonium- oder wasserlöslichen Aminsalze vor.

Kationische oberflächenaktive Substanzen sind z.B. quaternäre Alkylammoniumhalogenide mit mindestens einem $C_{12}$ bis $C_{25}$ Alkylrest und langkettige Alkylpyridiniumhalogenide.

Nichtionische oberflächenaktive Substanzen sind z.B. Ethylenoxid-Addukte aus der Klasse der Umsetzungsprodukte von Ethylenoxid mit gesättigten und/oder ungesättigten Fettalkohlen mit 6 bis 20 C-Atomen oder Alkylphenolen mit 4 bis 12 C-Atomen im Alkylrest oder gesättigten und/oder ungesättigten Fettaminen mit 14 bis 20 C-Atomen oder gesättigten und/oder ungesättigten Fettsäuren mit 14 bis 20 C-Atomen oder aber Pfropfpolymerisate von Ethylenoxid und Polypropylenglykol.

Die oberflächenaktive Substanz bzw. das Gemisch oberflächenaktiver Substanzen wird vorzugsweise in einer Menge von 0,2 bis 30 Gew.%, insbesondere von 0,5 bis 10 Gew.%, bezogen auf die zu erwartende Farbstoffmenge eingesetzt.

Bei dem erfindungsgemäßen Verfahren zur Herstellung von Dispersionsazofarbstoffen können die für die Herstellung derartiger Farbstoffe bekannten Diazo- und Kupplungskomponenten zum Einsatz kommen. Insbesondere können als diazotierbare Amine für das erfindungsgemäße Verfahren beispielsweise eingesetzt werden Aniline der allgemeinen Formel II

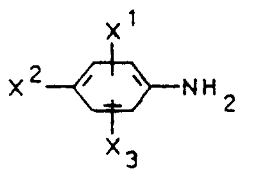

(II)

worin

$X^1$, $X^2$, $X^3$ Wasserstoff, Halogen, Alkyl oder Alkoxy mit 1 bis 4 C-Atomen, Nitro, Cyan, Trifluormethyl, Alkoxycarbonyl, Aminocarbonyl, N-Monoalkylaminocarbonyl, N,N-Dialkylaminocarbonyl, Alkylsulfonyl, Phenylsulfonyl, Phenylsulfonyloxy, Aminosulfonyl, N-Monoalkylaminosulfonyl, N,N-Dialkylaminosulfonyl, N-Phenylaminosulfonyl, Alkylcarbonyl, Benzoyl, gegebenenfalls alkylsubstituiertes Benzoyl,

$X^2$ darüberhinaus Phenylazo, das durch Halogen, Alkyl oder Alkoxy mit 1 bis 4 C-Atomen, Nitro, Cyan, Trifluormethyl, Alkoxycarbonyl, Alkylcarbonyl, Alkylsulfonyl ein- oder mehrfach substituiert sein kann, oder Phenoxy bedeuten. Weitere diazotierbare Amine sind z.B. Naphthylamin-1, das durch Halogen, Alkyl oder Alkoxy mit 1 bis 4 C-Atomen, Nitro oder Cyan ein-oder mehrfach substituiert sein kann, heterocyclische Amine, wie z.B. 2-Aminothiazol, das durch Nitro, Halogen, Alkyl mit 1 bis 4 C-Atomen, gegebenenfalls substituiertes Phenylazo oder Phenyl ein- oder mehrfach substituiert sein kann, 2-Aminobenzthiazol, das durch Alkyl oder Alkoxy mit 1 bis 4 C-Atomen, Halogen, Nitro, Cyano, Trifluormethyl, Thiocyanato, Alkylsulfonyl ein- oder mehrfach substituiert sein kann, 5-Aminoisothiazol, das durch Alkyl, Alkylthio oder Alkoxy mit 1 bis 4 C-Atomen, Halogen oder Phenyl ein- oder mehrfach substituiert sein kann, 3-Aminobenzisothiazol, das durch Halogen, Nitro oder Cyano ein- oder mehrfach substituiert sein kann, 2-Amino-1.3.4-thiadiazol, das durch Alkoxy, Alkylthio oder Alkylsulfonyl mit 1 bis 4 C-Atomen, Halogen oder Thiocyanato substituiert sein kann, 2-Amino-1.3.5-thiadiazol, das durch Alkoxy, Alkylthio mit 1 bis 4 C-Atomen substituiert sein kann, 2-Aminothiophen, das durch Halogen, Alkyl mit 1 bis 4 C-Atomen, Phenyl, Nitro, Cyan, Alkoxycarbonyl, Alkylcarbonyl, Benzoyl, Mono-, bzw. Di-alkylaminocarbonyl, Alkylsulfonyl, Phenylsulfonyl, Mono- bzw. Di-alkylaminosulfonyl, gegebenenfalls substituiertes Phenylazo substituiert sein kann.

Als Beispiele für Kupplungskomponenten, die bei dem erfindungsgemäßen Verfahren eingesetzt werden können, sind insbesondere zu nennen:

a) Aniline der allgemeinen Formel III

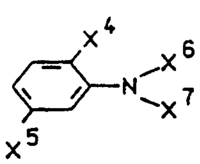

(III)

worin $X^4$ und $X^5$ unabhängig voneinander Wasserstoff, Halogen, Alkyl bzw. gegebenenfalls substituiertes Alkoxy mit 1 bis 4 C-Atomen,

$X^5$ darüber hinaus Alkylsulfonylamino bzw. gegebenenfalls substituiertes Alkylcarbonylamino mit 1 bis 4

C-Atomen in der Alkylgruppe,
$X^6$ und $X^7$ unabhängig voneinander Wasserstoff; Alkyl mit 1 bis 4 C-Atomen, das gegebenenfalls durch Halogen, Cyan, Phenyl, Hydroxy, Alkoxy, Phenoxy, Alkylcarbonyloxy, Alkoxycarbonyl, Alkoxycarbonyloxy substituiert ist; Alkenyl mit 2 bis 4 C-Atomen;
$X^6$ gegebenenfalls substituiertes Phenyl sein kann, ferner
b) 1-Aminonaphthaline der allgemeinen Formel IV

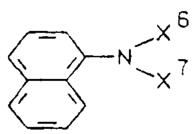

(IV),

c) Carbazole der allgemeinen Formel V

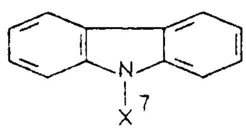

(V),

d) 2.6-Diamino-3-cyano-4-methylpyridine der allgemeinen Formel VI

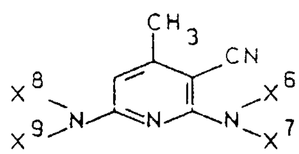

(VI),

e) 2-Aminothiazole der allgemeinen Formel VII

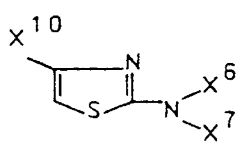

(VII),

f) 2-Aminothiophene der allgemeinen Formel VIII

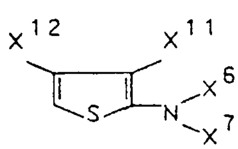

(VIII),

g) 2-Aminopyridine der allgemeinen Formel IX oder X

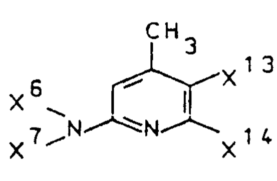

(IX)

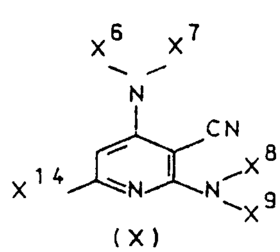

(X)

h) Aminopyrazole der allgemeinen Formel (XI)

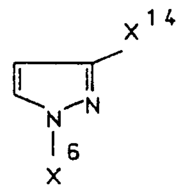

(XI),

i) Aminochinoline der allgemeinen Formel XII

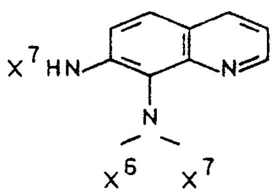

(XII),

k) Hydroxypyridone der allgemeinen Formel XIII

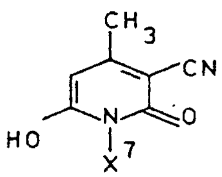

(XIII),

l) Pyrazolone der allgemeinen Formel XIV

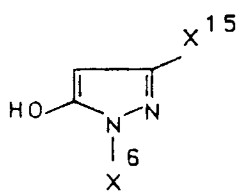

(XIV),

m) Hydroxychinolone der allgemeinen Formel XV

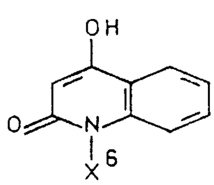

(XV),

n) Phenol, o-Kresol, Naphthol-2, Naphthol-2-sulfonsäure-6-(N-hydroxyethyl-N-methyl)-amid, Naphthol-2-sulfonsäure-6-(N-acetoxyethyl-N-methyl)-amid, wobei in den allgemeinen Formeln III bis VIII
$X^6$ und $X^7$ die oben genannten Bedeutungen besitzen,
$X^6$ und $X^6$ unabhängig davon die Bedeutungen von $X^6$ und $X^7$ haben können und
$X^{10}$ Wasserstoff, Alkyl, Phenyl, Hetaryl,
$X^{11}$ Wasserstoff, Alkyl, Phenyl,
$X^{12}$ Wasserstoff, Cyan, Alkoxycarbonyl, Alkylsulfonyl,
$X^{13}$ Cyan, Nitro, gegebenenfalls substituiertes Aminocarbonyl, Wasserstoff,

$X^{14}$ $NX^6X^7$, gegebenenfalls substituiertes Alkoxy oder Alkylthio,
$X^{15}$ Methyl, Aminocarbonyl
bedeuten.

Die erfindungsgemäß einzusetzenden Carbonsäureester werden im wäßrig sauren Milieu, wie es bei der Kupplung vorliegt, im Verlauf der Kupplung teilweise oder vollständig zu wasserlöslichen Produkten verseift, so daß das anfangs zweiphasige flüssige System in ein einphasiges übergeht. Die genannten Mengen von 0,3 bis 150 Gew.%, vorzugsweise 0,5 bis 50 Gew.%, ganz besonders bevorzugt 1 bis 15 Gew.%, einzusetzendem Carbonsäureester, bezogen auf die Menge des synthetisierten Farbstoffs, trocken gerechnet, beziehen sich daher auf den Zustand vor oder zu Beginn der Kupplung. In die Kupplungsmischung wird von der Kupplungslösung oder -dispersion und gegenbenenfalls von der Diazolösung oder -dispersion Wasser eingebracht. Hierdurch und durch evtl. Zugabe von Eis zur Kühlung und/oder wäßriger Lauge zur pH-Kontrolle kann das Flüssigkeitsvolumen des Ansatzes gegen Ende der Kupplung z.B. auf das 10- bis 50fache des Volumens ansteigen, das die Kupplerlösung oder -dispersion vor der Kupplung hatte. Bezogen auf die gesamte Wassermenge, die in dem Reaktionsansatz nach beendeter Kupplung vorhanden ist, werden bei dem erfindungsgemäßen Verfahren nur etwa 0,03 bis 15 Gew.%, in viele Fällen 0,03 bis 5 Gew.%, Carbonsäureester benötigt, der nach beendeter Kupplung in weitgehend oder vollständig verseifter Form vorliegt. Es war überraschend, daß derartig geringe Carbonestermengen überhaupt eine Auswirkung zeigen.

Durch das erfindungsgemäße Verfahren wird eine erhebliche Verbesserung der Kristallinität des hergestellten Farbstoffs bewirkt, was sich z.B. äußerst günstig auf das Filtrierverhalten des Farbstoffs auswirkt.

Der bei dem erfindungsgemäßen Verfahren nach der Kupplung ausgefallene Dispersions-Azofarbstoff kann sofort, ohne zusätzliche Wärmebehandlung, durch Filtration und Neutralwaschen isoliert werden. Die Filtrier- und Waschzeiten werden durch das erfindungsgemäße Verfahren erheblich verkürzt. Außerdem wird der Pastengehalt (d.h. Feststoffgehalt) des nach dem Abfiltrieren und Nachwaschen vorlie genden Filterkuchens erheblich erhöht.

Außerdem entsteht bei dem erfindungsgemäßen Verfahren in manchen Fällen direkt eine färbestabile Kristallmodifikation des Farbstoffs. Bisher war es zur Überführung einer färbeinstabilen Kristallmodifikation in einer färbestabile Kristallmodifikation erforderlich, den Farbstoff einer nachfolgenden Stabilisierungsoperation, z.B. durch Erhitzen, zu unterziehen.

Die in den nachfolgenden Beispielen genannten Prozentangaben sind Gewichtsprozente.

Beispiel 1:

217,5 g trockenes 2-Chlor-4.6-dinitranilin werden in 500 g 95%iger Schwefelsäure gelöst und bei 25 bis 40 °C mit 313 g 42%iger Nitrosylschwefelsäure diazotiert. Nach mehrstündigem Nachrühren wird so eine klare Diazolösung erhalten. Die Kupplerlösung wird wie folgt hergestellt: 280 g 4-Acetamino-2-amino-methoxyethoxybenzol werden in 250 ml Wasser bei 55 - 60 °C gelöst und bei dieser Temperatur innerhalb von 2 Stunden mit 202 g Diethylsulfat ethyliert. Sobald dabei durch die entstehende Ethylschwefelsäure der pH-Wert ca. 2,2 gefallen ist, wird er durch gleichzeitige Zugabe von 27%iger Natronlauge im weiteren Verlauf der Reaktion auf diesem Wert gehalten. Die so erhaltene Lösung wird sodann auf 10 - 15 °C abgekühlt, und es werden nacheinander 5 g Sulfaminsäure, 15 g eines handelsüblichen Pfropfpolymerisats auf Basis Polypropylenglykol und Ethylenoxid (Ethylenoxidgehalt 40%) sowie 35 g Butylacetat zugesetzt.

Zu dieser Kupplerlösung läßt man nun innerhalb von 2 Stunden die obige Diazolösung bei 10 - 15 °C zulaufen, wobei die Wärmetönung durch gleichmäßige Zugabe von ca. 1500 g Eis abgefangen wird. Nach beendeter Zugabe der Diazolösung wird sofort über eine Porzellannutsche vom Durchmesser 34 cm mit einem Stoffilter abgesaugt. Die Saugzeit beträgt ca. 5 Minuten. Der Filterkuchen ist in ca. 45 Minuten neutralgewaschen. Sein Pastengehalt beträgt nach Trockenblasen ca. 50 %.

Nach Trocknen im Vakuum erhält man ca. 450 g eines Farbstoffs der Formel

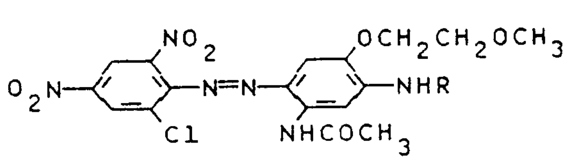

R = ~ 75 % $C_2H_5$

~ 25 % H,

der Polyester in marineblauen Farbtönen färbt.

Wird dieselbe Kupplung ohne Zusatz von Butylacetat ausgeführt, beträgt die Saugzeit mehrere Stunden, das Waschen des Filterkuchens dauert 1 - 2 Tage, und der Pastengehalt liegt bei 10 %. Da der Farbstoff während des Filtrierens länger der Schwefelsäure ausgesetzt ist, sinkt die Farbstoffausbeute um ca. 15 %.

Beispiel 2:

26,6 g 2-Ethylamino-4-propionylamino-methoxyethoxybenzol werden in 50 ml Wasser durch Zugabe von 8 g 95%iger Schwefelsäure gelöst und mit 0,4 g Sulfaminsäure, 0,2 g eines Ligninsulfonats und 5 g Essigsäureethylester versetzt. Auf diese Kupplerlösung wird bei 10 - 15 °C innerhalb von 2 Stunden eine Diazolösung, die aus 21,75 g trockenem 2-Chlor-4.6-dinitranilin analog Beispiel 1 hergestellt worden ist, unter Zugabe von 150 g Eis gekuppelt. Der entstandene Farbstoff wird sofort abgesaugt (Saugzeit 3 Minuten mit Porzellannutsche von 16 cm Durchmesser) mit kaltem Wasser bis pH 3 in 30 Minuten und anschließend mit etwa 50 °C warmem Wasser gewaschen und trockengeblasen. Man erhält auf diese Weise 101 g einer 45%igen Pasten und nach Trocknen im Vakuum bei 50 °C daraus 45,5 g (92 % der Theorie) eines Farbstoffs der Formel

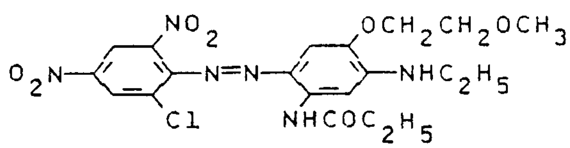

der Polyester in marineblauen Tönen färbt.

Beispiel 3:

262 g trockenes 2-Brom-4.6-dinitranilin werden in 30 Minuten in 570 g 95%iger Schwefelsäure eingetragen, unter Nachrühren vollständig gelöst und bei 20 bis 25 °C in 1 Stunde mit 333,6 g 40%iger Nitrosylschwefelsäure diazotiert. Nach 2-stündigem Nachrühren wird so eine klare Diazolösung erhalten. Unterdessen werden 216,6 g N-Acetyl-N'.N'-diethylphenylendiamin-1.3 in 1000 ml Wasser durch Zugabe von 75 g 95%iger Schwefelsäure bei 10 - 15 °C gelöst und die Lösung mit 12 g Sulfaminsäure, 15 g eines handelsüblichen Pfropfpolymerisats aus Polypropylenglykol und Ethylenoxid (Ethylenoxidegehalt 40 %) und 30 g Butylacetat versetzt. In 2 Stunden gibt man nun dazu bei 10 bis 15 °C die oben beschriebene Diazolösung, wobei die Temperatur durch Zugabe von 1350 g Eis gehalten wird. Dann wird über eine Porzellannutsche von 29 cm Durchmesser abgesaugt (Saugzeit 5 Minuten), mit 4 l kaltem Wasser bis pH 3 und anschließend mit wenig 80 °C heißem Wasser gewaschen und trockengeblasen. Es werden erhalten: 1061 g einer Paste mit 43 % Pastengehalt, entsprechend 456 g (90 % der Theorie) eines Farbstoffs der Formel

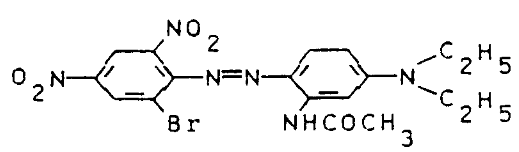

der Polyester in rotstichig blauen Tönen färbt.

Beispiel 4:

104 g 2-Amino-6-thiocyanatobenzthiazol werden bei 15 bis 20 °C in 1300 g 50%iger Schwefelsäure gelöst und bei -5 bis -10 °C in 1/2 Stunde mit 162 g 42%iger Nitrosylschwefelsäure diazotiert. Die so erhaltene Diazolösung wird bei 10 bis 15 °C in ca. 90 Minuten auf eine Lösung aus 146 g N.N-Diacetoxethyl-m-toluidin, 1500 ml Wasser, 62 g 95%ige Schwefelsäure und 5 g Sulfaminsäure, der kurz vor dem Kupplungsbeginn 25 g Butylacetat zugesetzt werden, gekuppelt. Sobald in der Kupplungssuspension

ein pH-Wert von 0,2 erreicht ist, wird der pH-Wert durch Zugabe von 27%iger Natronlauge bei 2 bis 4 gehalten und durch Zugabe von insgesamt ca. 1300 g Eis die Wärmetönung abgefangen. Man läßt 1 Stunde nachrühren, filtriert über eine Porzellannutsche von 29 cm Durchmesser (Saugzeit 2 Minuten), wäscht mit Wasser neutral und salzfrei und bläst trocken. Auf diese Weise erhält man 321 g einer 68,5%igen Paste, die 220 g (88,5 % der Theorie) eines Farbstoffs der Formel

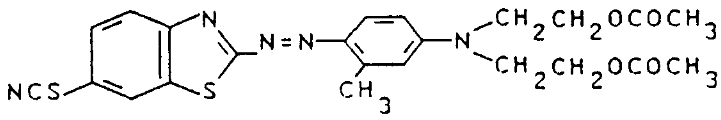

enthält, der Polyester in roten Tönen anfärbt.

Beispiel 5:

163 g 2-Cyan-4-nitranilin werden in 1050 g 80%iger Schwefelsäure bei 5 - 10 °C gelöst und bei dieser Temperatur durch Zugabe von 326 g 42%iger Nitrosylschwefelsäure in 1 Stunde diazotiert. Nach ca. 2 Stunden Nachrühren erhält man eine klare Diazolösung, die auf 1750 g Eis gegossen wird, wobei wiederum eine klare Lösung resultiert. Man versetzt diese Lösung bei 10 bis 15 °C mit 40 g Butylacetat und pumpt bei 10 bis 15 °C eine Suspension aus 250 g N-Phenethyl-N-cyanethylanilin und 750 g Wasser, die vorher mit einer Stiftmühle fein verteilt wurde, zu. Der Ansatz wird bis zur Beendigung der Kupplungsreaktion bei aufsteigender Temperatur nachgerührt. Dann wird über eine Porzellannutsche von 29 cm Durchmesser abgesaugt (Saugzeit 4 Minuten) und der Filterkuchen mit Wasser neutral gewaschen. Man erhält 610 g einer 60%igen Paste, die 366 g (86 % der Theorie) eines Farbstoffs der Formel

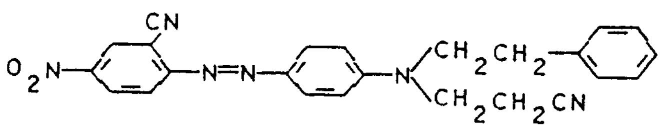

enthält, der Polyester in roten Tönen anfärbt.

Beispiel 6:

Eine fein verteilte Suspension von 120 g 4-Amino-4'-isopropyl-benzophenon in 1000 ml 13%iger Salzsäure wird bei 5 bis 10 °C mit 73 ml einer 40%igen Natriumnitritlösung diazotiert, über Kieselgur klar filtriert und mit 100 ml Wasser nachgewaschen. Diese Diazolösung wird bei 20 °C in 2 Stunden zu einer Kupplerlösung, die 800 ml Wasser, 85 ml 27%ige Natronlauge, 75 g 3-Cyan-4-methyl-2-hydroxypyridon-6, 12 g Butylacetat und 6 g eines Blockpolymerisats aus Polypropylenglykol und Ethylenoxid enthält, gegeben. Zur Beendigung der Umsetzung wird 30 Minuten nachgerührt, filtriert (Saugzeit über Porzellannutsche von 19 cm Durchmesser: 1 Minute), mit 3 l Wasser neutral und salzfrei gewaschen und trockengeblasen. Es werden erhalten:

422 g einer 45%igen Paste, entsprechend 190 g (95 % der Theorie) eines Farbstoffs der Formel

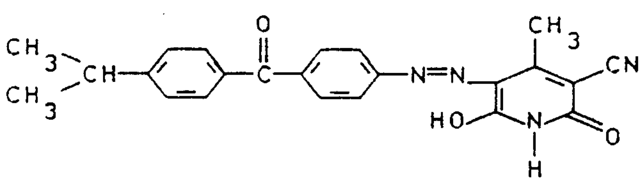

der Polyester in gelben Tönen färbt.

Der Farbstoff liegt nach röntgenopraphischer Analyse mit Cu-$K_\alpha$-Strahlen in der aus der EP-PS 68 186 bekannten färbestabilen Kristallmodifikation vor.

In einer Wiederholung des beschriebenen Verfahrens wird auf den Zusatz des Butylacetats verzichtet. Die Saugzeit beträgt jetzt 35 Minuten, der Trockengehalt des Nutschkuchens liegt bei 21%, die Ausbeute beläuft sich auf 95% der Theorie. Der so erhaltene Farbstoff weist nach röntgenographischer Analyse (Cu-$K_\alpha$-Strahlung) in der färbeinstabilen $\alpha$-Modifikation vor.

Beispiel 7:

173 g 2-Chlor-4-nitranilin werden in 400 g konz. Schwefelsäure in Lösung gerührt und mit 326 g 40%iger Nitrosylschwefelsäure bei 20 bis 30 °C diazotiert. Die so erhaltene Diazolösung wird bei 20 bis 25 °C in 2 Stunden auf eine fein verteilte Suspension aus 250 g N-Phenethyl-N-cyanethylanilin und 10 g eines Ligninsulfonats in 750 ml Wasser, der kurz vor der Kupplung 20 g Butylacetat zugesetzt werden, unter direkter Kühlung mit 1500 g Eis gekuppelt. Nach ca. 3-stündigem Nachrühren hat der Ansatz ausgekuppelt. Er wird über eine Porzellannutsche von 29 cm Durchmesser abgesaugt (Saugzeit: 1 Minute), mit Wasser neutral gewaschen und trockengeblasen. Es werden erhalten:
685 g einer 62%igen Paste, entsprechend 425 g (97,7 % d. Theorie) eines Farbstoffs der Formel

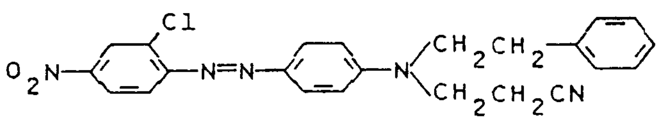

der Polyester in scharlachroten Tönen färbt.

Beispiel 8

a) 249 g 3'-Aminobenzolsulfonsäurephenylester in Form feuchter, technischer Ware werden in 1300 ml Wasser fein suspendiert, mit 700 ml 30%iger Salzsäure versetzt und innerhalb einer Stunde bei 10 bis 15 °C durch Zutropfen von 140 ml 40%iger Natriumnitritlösung diazotiert. Man läßt 1 Stunde nachreagieren, filtriert über Kieselgur und wäscht mit 500 ml Eiswasser nach. Die erhaltene Diazoniumsalzlösung wird innerhalb von 60 Minuten bei 25 bis 30 °C zu einer Kupplerlösung gegeben, die 1500 ml Wasser, 78 ml 50%ige Natronlauge, 164 g 3-Cyano-1.4-dimethyl-2-hydroxypyridon-6, 12 g Essigsäure-n-butylester und 10 g eines Ligninsulfonates enthält. Zur Vervollständigung der Reaktion wird 30 Minuten nachgerührt, filtriert (Saugzeit über eine Porzellannutsche von 19 cm Durchmesser: 3 Minuten), mit Wasser neutral und kupplerfrei gewaschen und trockengeblasen. Es werden erhalten 1094,5 g einer Paste mit Trockengehalt 38 %, entsprechend 415,9 g (98 % der Theorie) des Farbstoffs der Formel

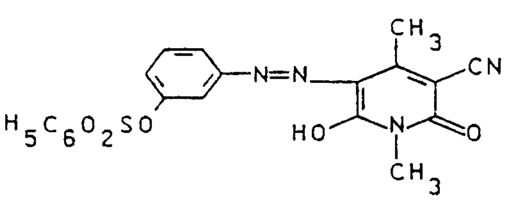

von Schmelzpunkt 203-204 °C, der Polyester in gelben Tönen färbt. Der Farbstoff liegt vor in einer färbestabilen Kristallmodifikation ($\beta$-Modifikation) mit dem Röntgenbeugungsdiagramm (Cu-$K_\alpha$-Strahlung) mit folgenden Linien starker Intensität bei Beugungswinkeln 2 $\theta$(°) von 14.23, 21.40, 27.37, Linien mittlerer Intensität bei Beugungswinkeln 2 $\theta$(°) von 9.66, 11.54, 14.90, 15.56, 18.83, 20.05, 22.68 und 24.61 und Linien geringer Intensität bei Beugungswinkeln 2 $\theta$(°) von 7.51, 12.85, 16.21, 26.20, 28.46, 31.02, 32.02.

b) In einer Wiederholung des Beispiels 8 a) werden der Kupplerlösung anstelle des Ligninsulfonates 12,5 g eines Tributylphenolpolyglykolethers mit einer durchschnittlichen Kettenlänge des Polyglykolrestes von 13 zugesetzt. Die Reaktionstemperatur bei der Kupplung beträgt 40 bis 45 °C. Die Saugzeit liegt bei 2 Minuten, der Trockengehalt des Filterkuchens bei 40 %, die Ausbeute bei 98 % der Theorie. Der Schmelzpunkt beträgt 203 bis 204 °C.

Der Farbstoff liegt vor in einer färbestabilen Modifikation ($\gamma$-Modifikation) mit folgenden Linien starker Intensität im Röntgenbeugungsdiagramm (Cu-$K_\alpha$-Strahlung) bei Beugungswinkeln 2 $\theta$(°) von 13.32, 24.86, 26.78, mit Linien mittlerer Intensität bei 6.68, 14.27, 15.36 und 21.11 sowie Linien geringer Intensität bei 11.61, 12.06, 18.74, 29.12 und 31.76.

c) In einer Wiederholung des Beispiels 8 b werden der Kupplerlösung anstelle des Essigsäurebutylesters 18 g Essigsäureethylester und anstelle des Tributylphenolpolyglykolethers 12.5 g eines Blockpolymerisats auf Basis Polypropylenglykol und Ethylenoxid (Ethylenoxidgehalt: 40 %) eingesetzt. In Saugzeit, Trockengehalt und Ausbeute entspricht das Verfahren dem Beispiel 8 b. Der Farbstoff (Schmelzpunkt 203 bis 204 °C) liegt nach röntgenographischer Analyse vor als Mischung aus beiden oben beschriebenen färbestabilen Modifikationen $\beta$ und $\gamma$.

d) Wiederholt man Beispiel 8 a ohne Carbonesterzusatz, beträgt die Saugzeit 18 Minuten, der Trockengehalt 24-% und die Ausbeute 98 % der Theorie. Der Schmelzpunkt liegt bei 203 bis 204 °C. Der so erhaltene Farbstoff liegt als färbeinstabile Modifikation (4[illegible]-Modifikation) mit folgenden Linien starker Intensität im Röntgenbeugungsdiagramm (Cu-$K_\alpha$-Strahlung) bei Beugungswinkeln von 2 $\theta$(°) von 11.23 und 22.60 und Linien geringer Intensität bei 2 $\theta$(°) von 9.47, 13.87, 14.85, 17.21, 18.80, 23.57, 25.47 und 28.56 vor.

e) Die beschriebenen färbestabilen Modifikationen $\beta$ und $\gamma$ können auch durch Erhitzen wäßriger Suspensionen, gegebenenfalls in Anwesenheit von oberflächenaktiven Substanzen, wie sie z.B. auf den Seiten 11 und 12 beschrieben werden, oder durch Kristrallisation aus organischen Lösungsmitteln wie z.B. Ethanol, Butanol oder Toluol erhalten werden.

Die in Beispiel 8 a - d erhaltenen Farbstoffe können nach bekannten Methoden z.B., durch Feinverteilung ihrer wäßrigen Suspensionen in Gegenwart von Dispergiermitteln, wie z.B. Ligninsulfonaten oder Kondensationsprodukten, aus Alkylphenol, Formaldehyd und Schwefelsäure mittels Perl-, Kugel- oder Sandmühlen und gegebenenfalls anschließender Sprühtrocknung in zur Färbung geeignete Dispersionen oder Pulver verarbeitet werden.

Die nach Verfahren der Beispiele 8 a, b und c hergestellten und anschließend gefinishten Farbstoffe flocken im wäßrigen Medium unter Färbebedingungen nicht aus, was besonders für die Färbung von Wickelkörpern, beispielsweise Kreuzspulen, von Bedeutung ist und zeigen bei den allgemein bekannten Färbetests, wie Heat-Stability-Test, Filterdurchflußtest sowie dem Test auf Lagerstabilität bei Raumtemperatur und bei 50 °C bessere Ergebnisse als die Farbstoffpräparationen aus der färbeinstabilen Modifikation nach Beispiel 8 d.

Beispiel 9

Wird Beispiel 3 wiederholt, anstelle des Butylacetats aber andere Carbonsäureester verwendet, erhält man die in der nachfolgenden Tabelle aufgeführten Ergebnisse.

| Carbonsäure-säureester | Menge (g) | Saugzeit (min) | Trocken-gehalt (%) | Ausbeute (% d.Th.) |
|---|---|---|---|---|
| Essigsäure--sec.butylester | 20 | 5 | 43 | 93 |
| -tert.butylester | 20 | 5 | 46 | 93 |
| -n/i-pentylester *) | 30 | 7 | 47 | 93 |
| -benzylester | 20 | 7 | 42 | 92 |
| -3-methoxy-n-butylester | 40 | 10 | 40 | 89 |
| -isopropenyl-ester | 30 | 5 | 41 | 92 |
| Bernsteinsäure-diethylester | 20 | 10 | 40 | 92 |
| Phenylessigsäure-ethylester | 10 | 12 | 37 | 90 |
| Glykolsäure-n-butylester | 30 | 10 | 38 | 88 |

*) (Kommerzielles Gemisch aus Essigsäure-n- und -i-pentylester)

## Patentansprüche

1. Verfahren zur Herstellung von Azodispersionsfarbstoffen durch Diazotierung und Kupplung in wäßriger Phase, dadurch gekennzeichnet, daß die Kupplung in Anwesenheit eines Esters einer gegebenenfalls substituierten niederaliphatischen Carbonsäure mit bis zu 6 C-Atomen und eines gegebenenfalls substituierten aliphatischen Alkohols durchgeführt wird.

2. Verfahren nach Anspruch 1, dadurch gekennzeichnet, daß die Kupplung in Anwesenheit von 0,3 bis 150 Gew.% vorzugsweise von 0,5 bis 50 Gew.%, ganz besonders bevorzugt 1 bis 15 Gew.%, des Esters, bezogen auf die erhaltene Farbstoffmenge, durchgeführt wird.

3. Verfahren nach Anspruch 1 und/oder 2, dadurch gekennzeichnet, daß bei der Kupplung die Lösung oder Dispersion des Diazoniumsalzes in die Lösung oder Dispersion der Kupplungskomponente eingetragen wird.

4. Verfahren nach einem oder mehreren der Ansprüche 1 bis 3, dadurch gekennzeichnet, daß die Kupplung bei Temperaturen von -10 bis 80 °C, vorzugsweise bei 0 bis 60 °C, besonders bevorzugt bei 0 bis 30 °C, durchgeführt wird.

5. Verfahren nach einem oder mehreren der Ansprüche 1 bis 4, dadurch gekennzeichnet, daß der Ester vor der Kupplung der Lösung oder Dispersion der Kupplungskomponente zugesetzt wird.

**6.** Verfahren nach einem oder mehreren der Ansprüche 1 bis 5, dadurch gekennzeichnet, daß die Kupplung in Anwesenheit eines Esters einer aliphatischen Monocarbonsäure mit 1 bis 6 C-Atomen oder einer aliphatischen Dicarbonsäure mit 2 bis 6 C-Atomen und eines aliphatischen Alkohols mit 1 bis 8 C-Atomen durchgeführt wird.

**7.** Verfahren nach einem oder mehreren der Ansprüche 1 bis 6, dadurch gekennzeichnet, daß die Kupplung in Anwesenheit eines Esters durchgeführt wird, dessen Carbonsäureteil und/oder Alkoholteil, vorzugsweise einfach, mit Phenyl, Phenoxy, ($C_1$ bis $C_8$)Alkoxy-carbonyl, ($C_1$ bis $C_8$)-Alkyl-carbonyloxy, ($C_1$ bis $C_8$)-Alkoxy, ($C_1$ bis $C_8$)Alkoxy-($C_1$ bis $C_8$)alkoxy, Methylen substituiert ist.

**8.** Verfahren nach einem odermehreren der Ansprüche 1 bis 7, dadurch gekennzeichnet, daß die Kupplung in Anwesenheit eines Esters einer gegebenenfalls substituierten nieder-aliphatischen Carbonsäure und eines gegebenenfalls substituierten aliphatischen Alkohols der Formel I

$R - CO - OR^1$ (I)

worin

R = H; Alkyl mit 1 bis 5 C-Atomen, das gegebenenfalls mit $-OR^3$, $-COOR^2$, $-O-CO-R^3$, $-C_6H_5$, $-OC_6H_5$ oder -OH substituiert ist,

$R^1$ = Alkyl mit 1 bis 8 C-Atomen, das gegebenenfalls mit $-OR^4$, $-COOR^4$, $-O-CO-R^4$, $-C_6H_5$, $-OC_6H_5$, $-O-(CH_2)_m-OR^4$ oder OH substituiert ist;

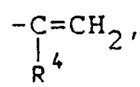

$R^2$, $R^3$, $R^4$ = Alkyl mit 1 bis 8 C-Atomen,

m = 1 bis 4

bedeuten, durchgeführt wird.

**9.** Verfahren nach einem oder mehreren der Ansprüche 1 bis 8, dadurch gekennzeichnet, daß die Kupplung in Anwesenheit eines Esters der Formel I

$R-CO-OR^1$ (I)

worin

R = H; Alkyl mit 1 bis 5 C-Atomen, $-(CH_2)_nCO-OR^2$

$R^1$, $R^2$ = Alkyl mit 1 bis 8 C-Atomen,

n = 0 bis 4

bedeuten, durchgeführt wird.

**10.** Verfahren nach einem oder mehreren der Ansprüche 1 bis 9, dadurch gekennzeichnet, daß die Kupplung in Anwesenheit eines Esters durchführt wird, der 3 bis 8 C-Atome besitzt.

## Claims

**1.** Process for the preparation of azo disperse dyestuffs by diazotization and coupling in an aqueous phase, characterized in that the coupling is carried out in the presence of an ester of an optionally substituted lower aliphatic carboxylic acid having up to 6 C-atoms and of an optionally substituted aliphatic alcohol.

**2.** Process according to Claim 1, characterized in that the coupling is carried out in the presence of 0.3 to 150% by weight, preferably 0.5 to 50% by weight and very particularly preferably 1 to 15% by weight, of the ester, relative to the amount of dyestuff obtained.

**3.** Process according to Claim 1 and/or 2, characterized in that, in the coupling reaction, the solution or dispersion of the diazonium salt is introduced into the solution or dispersion of the coupling component.

4. Process according to one or more of Claims 1 to 3, characterized in that the coupling is carried out at temperatures from -10 to 80 °C, preferably at 0 to 60 °C and particularly preferably at 0 to 30 °C.

5. Process according to one or more of Claims 1 to 4, characterized in that the ester is added to the solution or dispersion of the coupling component before the coupling reaction.

6. Process according to one or more of Claims 1 to 5, characterized in that the coupling is carried out in the presence of an ester of an aliphatic monocarboxylic acid having 1 to 6 C-atoms or an aliphatic dicarboxylic acid having 2 to 6 C-atoms and of an aliphatic alcohol having 1 to 8 C-atoms.

7. Process according to one or more of Claims 1 to 6, characterized in that the coupling is carried out in the presence of an ester in which the carboxylic acid part and/or the alcohol part is substituted, preferably monosubstituted, by phenyl, phenoxy, ($C_1$ to $C_8$)-alkoxycarbonyl, ($C_1$ to $C_8$)-alkylcarbonyloxy, ($C_1$ to $C_8$)-alkoxy, ($C_1$ to $C_8$)alkoxy-($C_1$ to $C_8$)-alkoxy or methylene.

8. Process according to one or more of Claims 1 to 7, characterized in that the coupling is carried out in the presence of an optionally substituted lower aliphatic carboxylic acid and of an optionally substituted aliphatic alcohol of the formula I

$R\text{-}CO\text{-}OR^1$ (I)

wherein
R denotes H; alkyl which has 1 to 5 C-atoms and is optionally substituted by $-OR^3$, $-COOR^2$, $-O\text{-}CO\text{-}R^3$, $-C_6H_5$, $-OC_6H_5$ or -OH,
$R^1$ denotes alkyl which has 1 to 8 C-atoms and is optionally substituted by $-OR^4$, $-COOR^4$, $-O\text{-}CO\text{-}R^4$, $-C_6H_5$, $-OC_6H_5$, $-O\text{-}(CH_2)_m\text{-}OR^4$ or OH;
or denotes

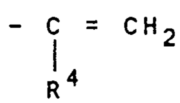

$R^2$, $R^3$ and $R^4$ denote alkyl having 1 to 8 C-atoms, and m denotes 1 to 4.

9. Process according to one or more of Claims 1 to 8, characterized in that the coupling is carried out in the presence of an ester of the formula I

$R\text{-}CO\text{-}OR^1$ (I)

wherein
R denotes H; alkyl having 1 to 5 C-atoms or $-(CH_2)_nCO\text{-}OR^2$,
$R^1$ and $R^2$ denote alkyl having 1 to 8 C-atoms and n denotes 0 to 4.

10. Process according to one or more of Claims 1 to 9, characterized in that the coupling is carried out in the presence of an ester having 3 to 8 C-atoms.

**Revendications**

1. Procédé de préparation de colorants azoïques de dispersion par diazotation et copulation en phase aqueuse, procédé caractérisé en ce que l'on effectue la copulation en présence d'un ester d'un acide carboxylique aliphatique inférieur pouvant avoir jusqu'à 6 atomes de carbone et le cas échéant des substituants, et d'un alcool aliphatique ayant éventuellement des substituants.

2. Procédé selon la revendication 1, caractérisé en ce que l'on effectue la copulation en présence de 0,3 à 150 %, de préférence de 0,5 à 50 % et tout spécialement de 1 à 15 %, en poids de l'ester, par rapport à la quantité formée du colorant.

**3.** Procédé selon la revendication 1 et/ou 2, caractérisé en ce que pour la copulation on ajoute la solution ou la dispersion du sel de diazonium à la solution ou dispersion de la composante de copulation.

**4.** Procédé selon une ou plusieurs des revendications 1 à 3, caractérisé en ce que l'on effectue la copulation à des températures de -10 à 80 °C, de préférence de 0 à 60 °C et notamment de 0 à 30 °C.

**5.** Procédé selon une ou plusieurs des revendications 1 à 4, caractérisé en ce que l'on ajoute l'ester avant la copulation à la solution ou à la dispersion de la composante de copulation.

**6.** Procédé selon une ou plusieurs des revendications 1 à 5, caractérisé en ce que l'on effectue la copulation en présence d'un ester d'un acide monocarboxylique aliphatique en $C_1$-$C_6$ ou d'un acide dicarboxylique aliphatique en $C_2$-$C_6$ et d'un alcool aliphatique en $C_1$-$C_8$.

**7.** Procédé selon une ou plusieurs des revendications 1 à 6, caractérisé en ce que l'on effectue la copulation en présence d'un ester dont la partie acide et/ou la partie alcool portent des substituants, de préférence un seul, pris parmi les groupes phényle, phénoxy, ($C_1$-$C_8$)alcoxycarbonyles, ($C_1$-$C_8$)-alkylcarbonyloxy, ($C_1$-$C_8$)alcoxy, ($C_1$-$C_8$)alcoxy-($C_1$-$C_8$)alcoxy et méthylène.

**8.** Procédé selon une ou plusieurs des revendications 1 à 7, caractérisé en ce que l'on effectue la copulation en présence d'un ester d'un acide carboxylique aliphatique inférieur éventuellement substitué et d'un alcool aliphatique éventuellement substitué, de formule I ci-dessous :

$R - CO - OR^1$ (I)

dans laquelle

| | |
|---|---|
| R | représente l'hydrogène ou un alkyle en $C_1$-$C_5$ avec éventuellement comme substituant un groupe $-OR^3$, $-COOR^2$, $-O-CO-R^3$, $-C_6H_5$, $-OC_6H_5$ ou -OH, et |
| $R^1$ | un alkyle en $C_1$-$C_8$ éventuellement substitué par un groupe $-OR^4$, $-COOR^4$, $-O-CO-R^4$, $-C_6H_5$, $-OC_6H_5$, $-O-(CH_2)_m-OR^4$ ou -OH ; ou encore un groupe |

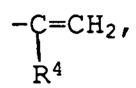

| | |
|---|---|
| $R^2$, $R^3$ et $R^4$ | étant des alkyles en $C_1$-$C_8$ et |
| m | un nombre de 1 à 4. |

**9.** Procédé selon une ou plusieurs des revendications 1 à 8, caractérisé en ce que l'on effectue la copulation en présence d'un ester de formule I ci-dessous :

$R - CO - OR^1$ (I)

dans laquelle

| | |
|---|---|
| R | représente l'hydrogène, un alkyle en $C_1$-$C_5$ ou un groupe $-(CH_2)_nCO-OR^2$, et |
| $R^1$ et $R^2$ | sont des alkyles en $C_1$-$C_8$, |
| n | étant un nombre de 0 à 4. |

**10.** Procédé selon une ou plusieurs des revendications 1 à 9, caractérisé en ce que l'on effectue la copulation en présence d'un ester ayant de 3 à 8 atomes de carbone.